# EUROPÄISCHE PATENTANMELDUNG

(11) **EP 0 982 097 A1**
(43) Veröffentlichungstag der Anmeldung: **01.03.2000**
(21) Anmeldenummer: 99113470.1
(22) Anmeldetag: 13.07.1999
(51) Int. Cl.: B23K 35/38, B23K 9/167

(54) **Verfahren zur WIG-Wechselstromschweissung von Aluminium**

(30) Priorität: 14.08.1998 DE 19837039
(71) Anmelder: MESSER GRIESHEIM GMBH, 60547 Frankfurt (DE)
(72) Erfinder: Farwer, Alfward, Dr., 40668 Meerbusch (DE)

(57) **Zusammenfassung**

Das Verfahren zur WIG-Wechselstromschweißung von Aluminium unter Verwendung eines Schutzgasgemisches von Helium und Argon verwendet ein Schutzgasgemisch von 83 bis 95 Vol.-% Helium, wobei der Rest überwiegend Argon ist.

## Beschreibung

Gegenstand der vorliegenden Erfindung ist ein Verfahren zur WIG-Wechselstromschweißung von Aluminium unter Verwendung eines Schutzgasgemisches von Helium und Argon.

Das WIG-Schweißen hat bei der Verarbeitung von Aluminium einen hohen Stellenwert. Aluminiumwerkstoffe sind hochwärmeleitfähig und benötigen daher eine besonders hohe Energieeinbringung. Weiterhin sind sie gekennzeichnet durch eine hochschmelzende Oxidschicht, die besonders verfahrenstechnische Maßnahmen zu ihre sicheren Zerstörung beim Schweißprozeß erfordern. Aus diesem Grunde wird Aluminium beim WIG-Verfahren vorzugsweise unter Wechselstrom verschweißt.

Bei mittleren und insbesondere bei höheren Blechdicken ist es häufig für die Energieeinbringung von Vorteil, anstelle von reinem Argon Gemische von Helium und Argon zu verwenden. Zunehmende Helium-Anteile führen allerdings zu einer Lichtbogen-Destabilisierung, die gerätetechnisch nur in gewissen Grenzen kompensiert werden kann.

Nach Ansicht der Fachleute führen also höhere Heliumanteile im Schutzgasgemisch zwar zu Vorteilen bei der Intensivierung des Einbrandes, jedoch führt dies zu verfahrenstechnischen Nachteilen, insbesondere zu einer mangelnden Lichtbogenstabilität. Es wird daher ein Heliumgehalt von 70 bis 80 % als verträgliches Maximum angesehen.

Aus der DE-C-40 07 673 ist ein Verfahren für das Schutzgasschweißen von Aluminium mit Gleichstrom und negativ gepolter Wolfram-Elektrode bei freihändiger Brennerführung bekannt, wobei das Schutzgas aus wenigstens 85% Helium und einem Restanteil von Argon bestehen soll. Dabei muß jedoch das Ende der Wolfram-Elektrode gerundet ausgebildet werden. Für dieses Verfahren wird von der Firma Linde ein Schutzgasgemisch enthaltend 90% Helium unter der Bezeichnung VARIGON angeboten und vertrieben; vgl. den Artikel aus Linde-KnowHow 2/97 "Ein vorteilhaftes "Paar".

Die WIG-Minuspolschweißung von Hand ist somit prinzipiell möglich aber dennoch schlechter durchführbar als die übliche Wechselstromschweißung. Sie stellt also nur eine Notlösung dar, wenn für eine Schweißaufgabe kein Wechselstromgerät verfügbar ist; vgl. A. Farwer, Krefeld und H. Wehner, Frankfurt in dem Artikel "Schutzgasschweißen" aus DVS Berichtsband 1985, Seite 3, linke Spalte. Dieser Artikel stellt darüber hinaus in übersichtlicher Weise die Vor- und Nachteile dieses Fachgebietes zusammen. Aus Seite 4, Bild 9 geht auch hervor, daß Schutzgasgemische bestehend aus 70% Helium und 30% Argon gerade noch zu einem akzeptablen zeitlichen Verlauf von Strom und Spannung führen, während reines Helium zu unsicheren und nicht mehr akzeptablen Bedingungen führt.

Die Erfindung hat sich die Aufgabe gestellt, Verfahren zur WIG-Wechselstromschweißung von Aluminium und aluminiumhaltigen Legierungen unter Verwendung eines Schutzgasgemisches aus Helium und Argon weiter zu verbessern und dabei bei maximierter Energieeinbringung gleichzeitig gute Lichtbogenstabilität zu gewährleisten, wobei weiterhin die Nahtschuppung, die Ausbildung der Reinigungszone und der Anfangseinbrand optimiert werden sollen.

Diese Aufgabe wird gelöst durch ein Verfahren mit den Merkmalen von Anspruch 1.

Es wird ein Schutzgasgemisch von Helium und Argon verwendet wird, welches 83 bis 95 Vol.-% Helium enthält und der Rest überwiegend Argon ist. Vorzugsweise enthält das Schutzgasgemisch 86 bis 92,5 Vol.-% Helium und besonders bevorzugt ist ein Schutzgasgemisch, welches 89 bis 90,5 Vol.-% Helium enthält.

Zu den aluminiumhaltigen Legierungen gehören die Aluminiumlegierungen mit Aluminium als Hauptkomponente und geringen Anteilen anderer Metalle wie Kupfer, Magnesium, Silicium, Mangan, Zink.

Es wurde überraschend festgestellt, daß in diesem Bereich der Mischungen die Summe aller Eigenschaften beim Schweißen und der Schweißergebnisse ein Optimum aufweist.

So wurde bei der Verschweißung von 6 mm dicken Blechen aus AlMg 3 mit einem Zusatz ebenfalls aus AlMg 3 (4 mm Durchmesser) als Kehlnaht im T-Stoß in horizontaler Schweißposition festgestellt, daß mit dem Gemisch 89,5 Vol.-% Helium und 10,5 Vol.-% Argon bei einer Stromstärke von 200 A genauso schnell wie unter reinem Helium geschweißt werden konnte. Gegenüber reinem Argon war die Schweißung um 30 % schneller, gegenüber einem Gemisch aus 75 Vol.-% Helium und 25 Vol.-% Argon um 10 % schneller. Die Nahtschuppung bei dem Gemisch 89,5 Vol.-% Helium und 10,5 Vol.-% Argon war regelmäßig und das Schmelzbad war gleichmäßig an den Nahtflanken angeflossen. Dagegen war unter reinem Helium die Nahtschuppung und das Anfließen an den Nahtflanken stark ungleichmäßig.

Das erfindungsgemäße Verfahren gestattet es zügig und sicher zu arbeiten, gleichzeitig noch ein gutes Nahtbild und einen guten Prozeßverlauf zu gewährleisten, so daß auch ein Schweißer mittlerer Qualität von der Übung her nicht ständig an seine Grenzen gerät.

Weiterhin wurde gefunden, daß durch geringe Zusätze anderer Gase, insbesondere zwei- bis siebensatomiger Gase, zusätzliche Effekte bewirkt werden können, die bei bestimmten Anwendungen sich günstig auswirken. Der Zusatz derartiger anderer Gase liegt im Bereich von jeweils 40 bis 700 vpm, wobei je nach Spezialbedingungen 40 bis 200 vpm Stickstoff und/oder 100 bis 600 vpm Sauerstoff zu optimierten Ergebnissen führen. Weitere Beispiele für andere Gase sind Kohlenmonoxid (CO), Distickstoffoxid (N₂O), Kohlendioxid (CO₂) und Schwefelhexafluorid (SF₆). Hierdurch kann in gewissen Grenzen das Einbrandprofil gezielt modifiziert werden, z. B. zur weiter verbesserten Erfassung der Schweißwurzel. Auch kann bei magnesiumhaltigen Legierungen die Porosität der Schweißnaht beeinflußt werden, wenn die Entgasungsbedingungen ungünstig sind.

## Patentansprüche

1. Verfahren zur WIG-Wechselstromschweißung von Aluminium und aluminlumhaltigen Legierungen unter Verwendung eines Schutzgasgemisches von Helium und Argon,
dadurch gekennzeichnet,
daß Teile aus Aluminium oder aluminiumhaltigen Legierungen verschweißt werden mit einem Schutzgasgemisch, das 83 bis 95 Vol.-% Helium enthält und der Rest überwiegend Argon ist.

2. Verfahren gemäß Anspruch 1,
dadurch gekennzeichnet,
daß das Schutzgasgemisch 86 bis 92,5 Vol.-% Helium enthält.

3. Verfahren gemäß Anspruch 1 oder 2,
dadurch gekennzeichnet,
daß das Schutzgasgemisch 89 bis 90,5 Vol.-% Helium enthält.

4. Verfahren gemäß einem der Ansprüche 1 bis 3,
dadurch gekennzeichnet,
daß das Schutzgasgemisch 40 bis 700 vpm von mindestens einem zwei- bis siebenatomigen Gas enthält.

5. Verfahren gemäß Anspruch 4,
dadurch gekennzeichnet,
daß das Schutzgasgemisch 40 bis 200 vpm Stickstoff enthält.

6. Verfahren gemäß Anspruch 4 oder 5,
dadurch gekennzeichnet,
daß das Schutzgasgemisch 100 bis 600 vpm Sauerstoff enthält.

7. Verwendung eines Schutzgasgemisches von Helium und Argon zur WIG-Wechselstromschweißung von Aluminium oder aluminiumhaltigen Legierungen, dadurch gekennzeichnet, daß das Schutzgasgemisch 83 bis 95 Vol.-% Helium enthält und der Rest überwiegend Argon ist.

8. Verwendung nach Anspruch 7, dadurch gekennzeichnet, daß das Schutzgasgemisch aus 83 bis 95 Vol.-% Helium und Argon besteht, so daß Helium und Argon zusammen 100 Vol.-% ergeben.

9. Verwendung nach Anspruch 7, dadurch gekennzeichnet, daß das Schutzgasgemisch 40 bis 700 vpm mindestes eines der Gase Stickstoff, Sauerstoff, Kohlenmonoxid (CO), Distickstoffoxid (N₂O), Kohlendioxid (CO₂) oder Schwefelhexafluorid (SF₆) enthält.

10. Verwendung nach Anspruch 7 oder 9, dadurch gekennzeichnet, daß das Schutzgasgemisch aus 83 bis 95 Vol.-% Helium, 100 bis 600 vpm Sauerstoff und/oder 40 bis 200 vpm Stickstoff und Rest Argon besteht, so daß die Gasanteile zusammen 100 Vol.-% ergeben.
